# EUROPÄISCHE PATENTANMELDUNG

(11) **EP 0 522 307 A2**
(43) Veröffentlichungstag der Anmeldung: **13.01.1993**
(21) Anmeldenummer: 92109979.2
(22) Anmeldetag: 13.06.1992
(51) Int. Cl.: C08L 77/00, C08L 65/00, C08L 81/06, C08L 71/12, C08K 7/14

(54) **Thermoplastische Formmassen auf der Basis von Polyarylethern und teilaromatischen Copolyamiden**

(30) Priorität: 01.07.1991 DE 4121705
(71) Anmelder: BASF Aktiengesellschaft, D-67063 Ludwigshafen (DE)
(72) Erfinder: Weber, Martin, Dr., W-6730 Neustadt (DE); Muehlbach, Klaus, Dr., W-6718 Gruenstadt (DE)

(57) **Zusammenfassung**

Thermoplastische Formmasse aus - bezogen auf die Summe aus A bis C - 5 bis 95 Gew.-% eines Polyarylethers A, 5 bis 95 Gew.-% eines teilaromatischen Copolyamids B sowie im Bedarfsfalle bis 40 Gew.-% eines faser- oder teilchenförmigen Füllstoffs C oder deren Mischungen.

## Beschreibung

Die Erfindung betrifft thermoplastische Formmassen, nämlich Mischungen (Blends) aus einem Polyarylether und einem teilaromatischen Copolyamid, die außerdem faser- oder teilchenförmige Füllstoffe enthalten können und deren Verwendung zur Herstellung von Formkörpern.

Blends aus Polyarylethern und Polyamiden werden beispielsweise in der DE-OS 21 22 735 beschrieben. Der Zusatz von Polyamid soll die Fließfähigkeit des eingesetzten Polysulfons verbessern. Aus Polyamid und dem hochwärmeformbeständigen Polysulfon hergestellte Blends haben andererseits im Vergleich zum reinen Polyamid eine deutlich verbesserte Wärmeformbeständigkeit.

Werden aliphatische Polyamide verwendet, weisen die Blends im Vergleich zum Polyarylether eine nur geringfügig verbesserte Steifigkeit auf.

Es wurde nun gefunden, daß sich Mischungen aus Polyarylethern und teilaromatischen Copolyamiden durch hervorragende Steifigkeit und hohe Wärmeformbeständigkeit auszeichnen.

Unmittelbarer Erfindungsgegenstand sind Formmassen, die enthalten - bezogen auf die Summe aus A bis C -
- A:: 5 bis 95 Gew.-% eines Polyarylethers,
- B:: 5 bis 95 Gew.-% eines teilaromatischen Copolyamids sowie im Bedarfsfalle
- C:: bis 40 Gew.-% eines faser- oder teilchenförmigen Füllstoffs oder deren Mischungen.

### Polyarylether

Die Herstellung der Polyarylether A ist allgemein bekannt (vgl. z.B. GB 1 152 035; US 4 870 153), ebenso die Herstellung von Polyarylethern mit Blockstruktur (DE 3 742 264).

Polyarylether sind gekennzeichnet durch wiederholte Strukturelemente I 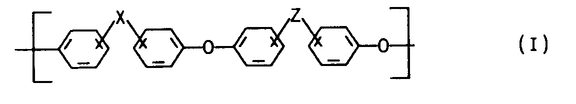
oder deren kernsubstituierte C₁-C₆-Alkyl-, Alkoxy-, Aryl-, Chlor- oder Fluorderivate, wobei
X und Z unabhängig voneinander

-SO₂-, -SO-, -O-, -CO- oder -N=N-,

und Z außerdem
-S-, -CR''=CR'''- eine chemische Bindung oder -CRR'- bedeuten, mit der Maßgabe, daß mindestens eine der Variablen X oder Z -SO₂- oder -CO-bedeuten, wobei R und R' jeweils Wasserstoffatome, C₁-C₆-Alkyl oder C₁-C₆-Alkoxy, Aryl oder deren Fluor- oder Chlorderivate und R'' und R''' jeweils Wasserstoffatome oder C₁-C₆-Alkyl darstellen.

Die Polyarylether können beliebige Endgruppen, wie z. B. Halogen-, Methoxy-, Hydroxy-, Phenoxy-, Benzyloxy- oder Aminoendgruppen enthalten.

Das Molekulargewicht geeigneter Polyarylether (I) liegt im allgemeinen im Bereich von 1500 - 60000 g/mol.

Liegen die Polyarylethersegmente in Copolymeren - soweit herstellbar - mit Struktureinheiten von Polyamiden, Polyestern, aromatischen Polycarbonaten oder Polyestercarbonaten, Polysiloxanen, Polyimiden oder Polyetherimiden vor, sind die Molekulargewichte der Blöcke- bzw. der Pfropfarme in den Copolymeren im Bereich von 1000 - 30000 g/mol; die Blöcke unterschiedlicher Struktur können in den Copolymeren alternierend oder statistisch angeordnet sein. Der Gewichtsanteil der Polyarylether in den Copolymeren soll 3 - 97, vorzugsweise 10 - 90 und insbesondere 20 - 80 Gew.-% betragen. Methoden zur Synthese solcher Copolymerer sind bei A. Noshay et. al., Block Copolymers, Academic Press, 1977, beschrieben.

Geeignete Verfahrensbedingungen zur Synthese von Polyarylethern sind beispielsweise in den EP-A-113 112 und EP-A-135 130 beschrieben.

Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator oder die Umsetzung in der Schmelze.

Der Gewichtsanteil der Polyarylether an den erfindungsgemäßen Formmassen beträgt 5 bis 95, besonders bevorzugt sind 15 bis 85 Gew.-%.

### Copolyamide B

Die für die erfindungsgemäßen Formmassen verwendeten teilaromatischen Copolyamide B bestehen z.B. aus
- B1:: 20 bis 90 Gew.-% Einheiten, die sich von Terephthalsäure und Hexamethylendiamin ableiten und
- B2:: 10 bis 80 Gew.-% Einheiten mindestens eines der Bausteine B 21, B 22 und/oder B 23, nämlich
- B21:: bis zu 50 Gew.-% Einheiten B 21, die sich von ε-Caprolactam ableiten,
- B22:: bis zu 80 Gew.-% Einheiten B 22, die sich von Adipinsäure und Hexamethylendiamin ableiten und/oder
- B23:: bis zu 40 Gew.-% Einheiten B 23 aus weiteren polyamidbildenden Monomeren.

Zur Stabilisierung gegen oxydativen und thermischen Abbau können darüber hinaus dem Copolyamid oder dem herzustellenden Blend bis zu 2 Gew.-% mindestens eines aromatischen, sekundären Amins und/oder bis zu 2000 ppm mindestens einer phosphorhaltigen anorganischen Säure oder deren Derivate zugesetzt werden (Stabilisatoren), wobei der Anteil an Stabilisatoren sich auf die anteilige Menge an Copolyamid bezieht.

Der Anteil an Einheiten, die sich von ε-Caprolactam ableiten, beträgt vorzugsweise 20 bis 50 Gew.-%, insbesondere 25 bis 40 Gew.-%, während der Anteil an Einheiten die sich von Adipinsäure und Hexamethylendiamin ableiten, vorzugsweise 30 bis 75 Gew.-% und insbesondere 35 bis 60 Gew.-% beträgt.

Die Copolyamide können sowohl Einheiten von ε-Caprolactam als auch Einheiten von Adipinsäure und Hexamethylendiamin enthalten; dabei beträgt der Anteil an solchen Einheiten, die frei von aromatischen Gruppen sind, mindestens 10 Gew.-%, vorzugsweise mindestens 20 Gew.-%. Das Verhältnis der Einheiten, die sich von ε-Caprolactam und von Adipinsäure und Hexamethylendiamin ableiten, kann ein beliebiges sein.

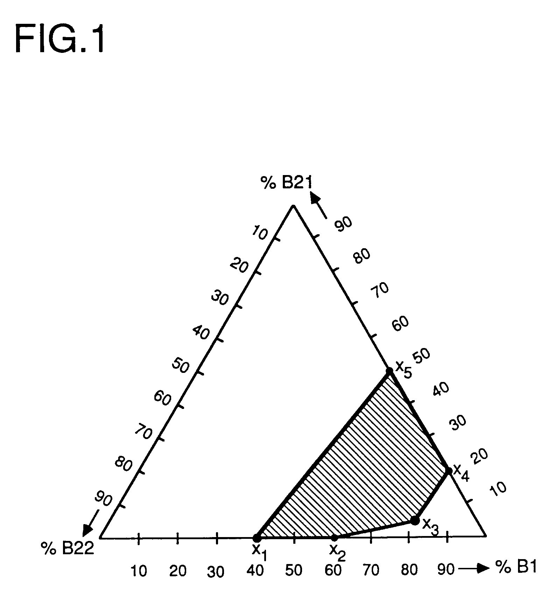

Bevorzugt werden Copolyamide, deren Zusammensetzung in einem Dreistoffdiagramm (vgl. Fig. 1) innerhalb des durch Eckpunkte X₁ bis X₅ festgelegten Fünfecks liegt, wobei die Punkte X₁ bis X₅ folgendermaßen definiert sind:
- X₁:: 40 Gew.-% Einheiten B1
60 Gew.-% Einheiten B22
- X₂:: 60 Gew.-% Einheiten B1
40 Gew.-% Einheiten B22
- X₃:: 80 Gew.-% Einheiten B1
5 Gew.-% Einheiten B21 15 Gew.-% Einheiten B22
- X₄:: 80 Gew.-% Einheiten B1
20 Gew.-% Einheiten B21
- X₅:: 50 Gew.-% Einheiten B1
50 Gew.-% Einheiten B21
Als besonders vorteilhaft für viele Anwendungszwecke haben sich Polyamide erwiesen mit 50 bis 80, insbesondere 60 bis 75 Gew.-% Einheiten, die sich von Terephthalsäure und Hexamethylendiamin ableiten (Einheiten B1) und 20 bis 50, vorzugsweise 25 bis 40 Gew.-% Einheiten, die sich von ε-Caprolactam ableiten (Einheiten B21) enthalten.

Neben den vorstehend beschriebenen Einheiten B1 bis B22 können die teilaromatischen Copolyamide bis zu 40, vorzugsweise 10 - 30 Gew.-% und insbesondere 20 - 30 Gew.-% weitere polyamidbildende Monomeren B3 enthalten, wie sie von anderen Polyamiden bekannt sind.

Zur Einbringung des Bausteins B 23 sind z.B. geeignet aromatische Dicarbonsäuren wie beispielsweise Isophthalsäure, substituierte Terephthal- und Isophthalsäuren wie 3-t-Butylisophthalsäure, mehrkernige Dicarbonsäuren, z. B. 4,4'-Diphenyldicarbonsäure, 4,4'-Diphenylmethandicarbonsäure, 4,4'- und 3,3'-Diphenylsulfondicarbonsäure, 1,4- oder 2,6-Naphthalindicarbonsäure, Phenoxyterephthalsäure, wobei Isophthalsäure besonders bevorzugt ist.

Ferner geeignet als polyamidbildende Dicarbonsäuren sind aliphatische Dicarbonsäuren mit 4 bis 16 Kohlenstoffatomen und als polyamidbildende Diamine aliphatische oder cycloaliphatische Diamine mit 4 bis 16 Kohlenstoffatomen. Als geeignete Monomere dieser Art seien Suberinsäure, Azelainsäure oder Sebacinsäure bzw. 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan genannt. Aus der Gruppe der Lactame bzw. Aminocarbonsäuren kommen Capryllactam, Önanthlactam, ω-Aminoundecansäure und Laurinlactam als geeignet infrage.

Hierbei sind folgende Zusammensetzungen der Komponente B besonders bevorzugt:
- B1:: 65 bis 85 Gew.-% Einheiten, die sich von Terephthalsäure und Hexamethylendiamin ableiten und
- B23:: 15 bis 35 Gew.-% Einheiten, die sich von Isophthalsäure und Hexamethylendiamin ableiten
oder
- B₁:: 50 bis 70 Gew.-% Einheiten, die sich von Terephthalsäure und Hexamethylendiamin ableiten und
- B22:: 10 bis 20 Gew.-% Einheiten, die sich von Adipinsäure und Hexamethylendiamin ableiten und
- B23:: 20 bis 30 Gew.-% Einheiten, die sich von Isophthalsäure und Hexamethylendiamin ableiten
Enthält B23 4,4'-substituierte symmetrische Dicarbonsäuren, so empfiehlt es sich, diese mit B1 und B21 oder B1 und B22 als ternäre Copolyamide aufzubauen, da andernfalls das Copolyamid einen zu hohen Schmelzpunkt aufweist und nur unter Zersetzung schmiltzt, was nicht wünschenswert ist.

Es sollte darauf geachtet werden, daß die teilaromatischen Copolyamide einen Triamingehalt von weniger als 0,5, vorzugsweise von weniger als 0,3 Gew.-% aufweisen.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam haben bei Gehalten von etwa 70 Gew.-% an Einheiten, die sich von Terephthalsäure und Hexamethylendiamin ableiten, einen Schmelzpunkt im Bereich von 300°C und (im trockenen Zustand) eine Glasübergangstemperatur von mehr als 110°C.

Binäre Copolyamide auf der Basis von Terephthalsäure, Adipinsäure und Hexamethylendiamin erreichen bereits bei niedrigerem Gehalt (z.B. von etwa 55 Gew.-% Einheiten) an Terephthalsäure und Hexamethylendiamin (HMD) einen Schmelzpunkt von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Die Herstellung teilaromatischer Copolyamide mit hoher Wärmeformbeständigkeit und guten mechanischen Eigenschaften wird z.B. in der DE-OS 3 723 688 beschrieben.

Unter dem Begriff "teilaromatische Copolyamide" werden erfindungsgemäß solche bevorzugt verstanden, die einen Kristallinitätsgrad mehr als 10 %, bevorzugt mehr als 15 %, und insbesondere mehr als 20 % aufweisen.

Der Kristallinitätsgrad ist ein Maß für den Anteil an kristallinen Fragmenten im Copolyamid und wird durch Röntgenbeugung bestimmt.

Die bevorzugten teilaromatischen Copolyamide mit niedrigem Triamingehalt werden nach den in den EP-A 129 195 und 129 196 beschriebenen Verfahren sicher erhalten.

Die relative Viskosität der teilaromatischen Copolyamide, gemessen in 1 Gew.-% Lösung in 96 Gew.-% H₂SO₄ bei 23°C, liegt im allgemeinen im Bereich von 2,2 bis 5,0, vorzugsweise von 2,3 bis 4,5.

Als Copolyamide B können natürlich auch Mischungen verschiedener Copolyamide eingesetzt werden, wobei das Mischungsverhältnis beliebig ist.

Als Stabilisatoren enthalten die erfindungsgemäßen Formmassen üblicherweise entweder ein aromatisches sekundäres Amin oder eine Phosphorverbindung oder beides. Das aromatische sekundäre Amin wird z.B. in Mengen von 0,1 bis 2, vorzugsweise 0,5 bis 1,5 und insbesondere 0,7 bis 1 Gew.-%, verwendet. Geeignete derartige Amine können z.B. durch die allgemeine Formel 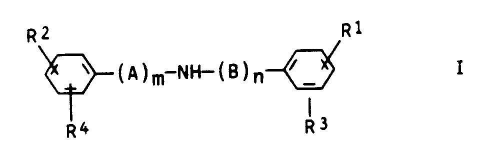
beschrieben werden, in der bedeuten
- m, n:: 0 oder 1;
- A, B:: durch C₁-C₄-Alkyl oder Phenyl substituiertes tertiäres C;
- R¹, R³:: Wasserstoff oder eine C₁-C₆-Alkylgruppe in ortho- oder para-Stellung, welche gegebenenfalls substituiert sein kann durch 1 bis 3 Phenylreste, Halogen, Carboxylgruppe oder ein übergangsmetallsalz dieser Carboxylgruppe und
- R³, R⁴:: Wasserstoff oder einen Methylrest in ortho- oder para-Position, wenn m plus n für 1 steht oder eine tertiäre C₃-C₉-Alkylgruppe in ortho- oder para-Position, welche gegebenenfalls durch 1 bis 3 Phenylreste substituiert sein kann, wenn m plus n für 0 oder 1 steht.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-butyl, wobei die Methylgruppen vorzugsweise durch 1 bis 3 Phenylgruppen ersetzt sein können. Bevorzugte Halogene sind Chlor und Brom. Übergangsmetalle sind beispielsweise Kupfer oder Nickel, welche mit R¹ oder R² = Carboxyl-Übergangsmetallsalze bilden können.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für geeignete sekundäre aromatische Amine sind der nicht vorveröffentlichten deutschen Patentanmeldung P 4 112 324.7 zu entnehmen.

Bevorzugte sekundäre aromatische Amine sind Diphenylamin und dessen Derivate, welche als Naugard® (Firma Uniroyal) im Handel erhältlich sind.

Außerdem enthalten die erfindungsgemäßen Formmassen z.B. 100 bis 2000, bevorzugt 200 - 500 und insbesondere 200 bis 400 ppm mindestens einer phosphorhaltigen anorganischen Säure oder deren Derivate, (bezogen auf das Polyamid B in der Formmasse).

Bevorzugte Säuren sind hypophosphorige Säure, phosphorige Säure oder Phosphorsäure sowie deren Salze mit Alkalimetallen, wobei Natrium und Kalium besonders bevorzugt sind. Bevorzugte Mischungen sind insbesondere hypophosphorige und phosphorige Säure bzw. deren Alkalimetallsalze im Verhältnis 3 : 1 bis 1 : 3. Unter organischen Derivaten dieser Säuren sollen vorzugsweise Esterderivate oben genannter Säuren verstanden werden.

Die teilaromatischen Copolyamide zeichnen sich durch eine sehr gute Wärmeformbeständigkeit bei guten mechanischen Eigenschaften aus, wobei das gute Eigenschaftsniveau durch die hohe Glastemperatur auch nach Konditionierung über einen relativ großen Temperaturbereich aufrechterhalten wird. Diese Eigenschaften teilen sich auch den erfindungsgemäßen Blends mit hochwärmeformbeständigen Polyarylethern mit.

### Füllstoffe:

Über die vorstehenden Bestandteile hinaus können die erfindungsgemäßen Formmassen z.B. bis 40, vorzugsweise von 5 bis 35 Gew.-% faser- oder teilchenförmige Füllstoffe oder deren Mischungen enthalten. Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Füllverstärkungsstoffe sind Kohlenstoffasern, Kaliumtitanatwhisker, Aramidfasern und besonders bevorzugt Glasfasern.

Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Zusätzlich zu den beschriebenen Bestandteilen können die erfindungsgemäßen Formmassen z.B. noch bis zu 40 Gew.-% weiterer Additive wie Flammschutzmittel und UV-Stabilisatoren enthalten.

Die erfindungsgemäßen thermoplastischen Formmassen können nach an sich bekannten Verfahren hergestellt werden, indem man in üblichen Mischvorrichtungen wie Knetern oder Schneckenextrudern, vorzugsweise Zweischneckenextrudern, Brabender-Mühlen oder Banbury-Mühlen mischt und anschließend extrudiert.

Um eine möglichst homogene Formmasse zu erhalten, ist eine intensive Durchmischung notwendig. Dazu sind im allgemeinen mittlere Mischzeiten von 0,2 bis 30 Minuten bei einer Temperatur von 280 bis 380°C erforderlich. Die Reihenfolge der Mischung der Komponenten kann variiert werden, so können 2 Komponenten ggf. vorgemischt werden, es können aber auch alle Komponenten gemeinsam gemischt werden.

Die erfindungsgemäßen Formmassen zeichnen sich durch hohe Wärmeformbeständigkeit, gute Fließfähigkeit sowie hervorragende Steifigkeit (E-Modul) aus.

Aufgrund ihrer hohen Wärmeformbeständigkeit und guten mechanischen Eigenschaften eignen sich die erfindungsgemäßen Formmassen zum Herstellen von Formteilen, insbesondere für elektrische und elektronische Gerätebauteile. Die hohe Wärmeformbeständigkeit in Kombination mit guter Chemikalienbeständigkeit ermöglicht auch Anwendungen im chemisch-technischen Anlagenbau.

### Beispiele

Es wurden die nachstehenden Rohstoffe bereitgestellt

### Polyarylether A

- A₁:: Polyarylether der überwiegenden Grundstruktur entsprechend Formel A₁, charakterisiert durch eine VZ von 64 ml/g, gemessen 1 %ig in Phenol/1,2 Dichlorbenzol 1:1.

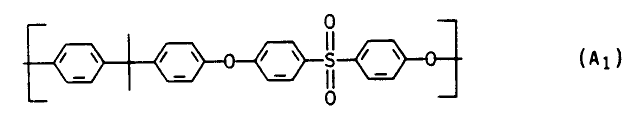

### Komponente A₂

- A₂:: Polyarylether mit einer überwiegenden Grundstruktur entsprechend Formel A₂, charakterisiert durch eine VZ von 59 ml/g gemessen 1%-ig in Phenol/1,2-Dichlorbenzol 1:1.

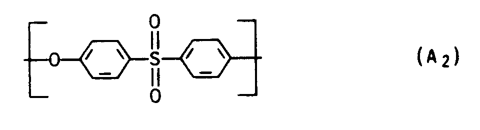

### Copolyamid B

- B:: Teilaromatisches Copolyamid bestehend aus 55 Tl. Terephthalsäure, 35 Tl. ε-Caprolactam und 38,5 Tl. Hexamethylendiamin, charakterisiert durch eine relative Viskosität von 2,4 (gemessen 1%-ig in 96%-iger Schwefelsäure).

### Faserstoff C

- C:: Glasfaserrovings mit einer Dicke von 10 µm
Vergleichspolyamid
Für Vergleichsexperimente wurde ein aliphatisches Polyamid eingesetzt (PA):
- PA:: Polyhexamethylenadipinsäureamid mit einem K-Wert (nach Fikentscher) von 76; entsprechend einer relativen Viskosität ηᵣₑₗ von 2,95 gemessen 1%-ig in 96%-iger Schwefelsäure.

### Herstellung der Formmassen

Die Bestandteile wurden in einem Zweiwellenextruder bei einer Massetemperatur von 310 bis 350°C gemischt. Die Schmelze wurde durch ein Wasserbad geleitet und granuliert.

Die verwendeten Polyamide (Komponente B und PA) enthalten jeweils, bezogen auf den Anteil der Polyamide im Blend, 1 Gew.-% 4,4'-Bis(α,α-dimethylbenzyl)diphenylamin (Naugard® 445, Firma Uniroyal) sowie 500 ppm NaH₂PO₃ x 5 H₂O (Handelsprodukt der Firma Merck).

Das getrocknete Granulat wurde bei 310 bis 330°C zu Schulterstäben und Normkleinstäben verarbeitet.

Die Vicat-Erweichungstemperatur wurde nach DIN 53 460, mit einer Kraft von 49,05 N und einer Temperatursteigerung von 50 K je Stunde, an Normkleinstäben bestimmt.

Der Elastizitätsmodul wurde nach DIN 53 457-3 an Schulterstäben bestimmt.

Zusammensetzung der Formmassen und Ergebnisse der Messungen sind den Tabellen 1 und 2 zu entnehmen.

**Tabelle 1**

| Formmasse Nr. | 1 | 2 | 3 | 4 | 5 | V₁ | V₂ | V₃ |
|---|---|---|---|---|---|---|---|---|
| Komponente [Gew.-%] | | | | | | | | |
| A₁ | 100 | 75 | 50 | 25 | 0 | 50 | 25 | - |
| B | - | 25 | 50 | 75 | 100 | - | - | - |
| PA | - | - | - | - | - | 50 | 75 | 100 |
| T_{Vicat} [°C] | 182 | 178 | 179 | 185 | 285 | n.b. | n.b. | n.b. |
| E-Modul [N/mm²] | 2700 | 3100 | 3300 | 3470 | 3500 | 2700 | 2720 | 2790 |
| n.b.: nicht bestimmt | | | | | | | | |

**Tabelle 2**

| Formmasse Nr. | 6 | 7 | V4 | 8 | 9 | 10 | 11 | 12 | 13 |
|---|---|---|---|---|---|---|---|---|---|
| Komponente [Gew.-%] | | | | | | | | | |
| A₁ | - | - | - | - | 47 | 47 | 70 | - | - |
| A₂ | 67 | 50 | 50 | 100 | - | - | - | 70 | 47 |
| B | 33 | 50 | - | - | 23 | - | - | - | 23 |
| C | - | - | - | - | 30 | 30 | 30 | 30 | 30 |
| PA | - | - | 50 | - | - | 23 | - | - | - |
| T_{Vicat} [°C] | 208 | 207 | n.b. | 217 | 183 | 211 | 184 | 214 | 212 |
| E-Modul [N/mm²] | 3300 | 3400 | 2750 | 2860 | 11000 | 9200 | 9300 | 9700 | 11600 |
| n.b.: nicht bestimmt | | | | | | | | | |

Wie die Beispiele zeigen, zeichnen sich die erfindungsgemäßen Formmassen durch hohe Wärmeformbeständigkeit und Steifigkeit aus.

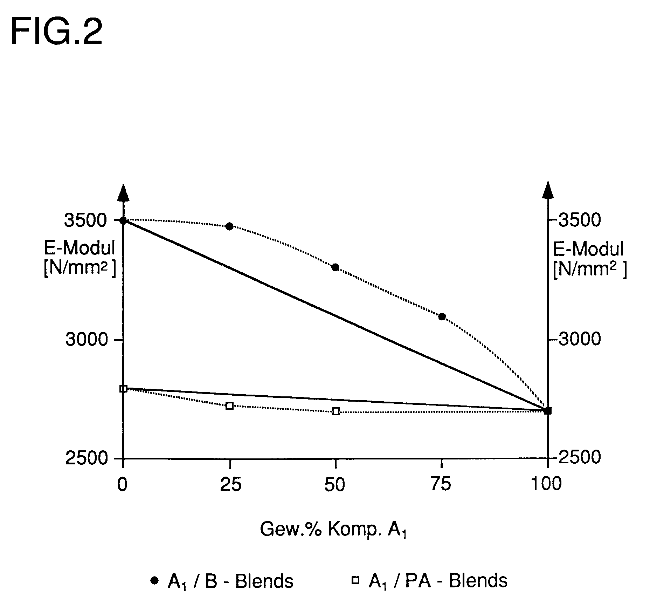

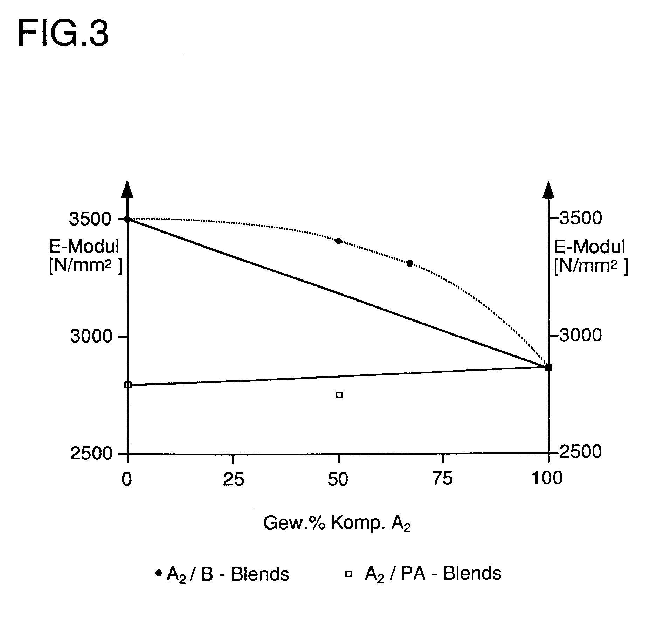

Bemerkenswert ist insbesondere, daß die E-Moduli der Blends über den theoretischen Werten (berechnet aus den Gewichtsanteilen und E-Moduli der Komponenten) liegen (Fig. 2 u. 3).

## Patentansprüche

1. Thermoplastische Formmasse, enthaltend - bezogen auf die Summe aus A bis C -
A: 5 bis 95 Gew.-% eines Polyarylethers A, mit wiederholten Strukturelementen I 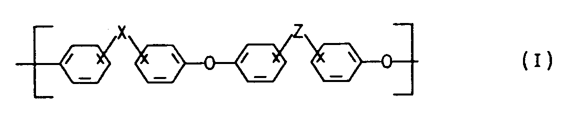 oder deren kernsubstituierten C₁-C₆-Alkyl-, Alkoxy-, Aryl-, Chlor- oder Fluorderivate, wobei
X und Z unabhängig voneinander
-SO₂-, -SO-, -O-, -CO- oder -N=N-,
und Z außerdem
-S-, -CR''=CR'''- eine chemische Bindung oder -CRR'- bedeuten, mit der Maßgabe, daß mindestens eine der Variablen X oder Z -SO₂-oder -CO- bedeuten, wobei R und R' jeweils Wasserstoffatome, C₁-C₆-Alkyl oder C₁-C₆-Alkoxy, Aryl oder deren Fluor- oder Chlorderivate und R'' und R''' jeweils Wasserstoffatome oder C₁-6₆-Alkyl darstellen
B: 5 bis 95 Gew.-% eines teilaromatischen Copolyamids B sowie im Bedarfsfalle
C: bis 40 Gew.-% eines faser- oder teilchenförmigen Füllstoffs C oder deren Mischungen.

2. Formmasse nach Anspruch 1, enthaltend
15 bis 85 Gew.-% A,
15 bis 85 Gew.-% B,
5 bis 35 Gew.-% C.

3. Formmasse nach Anspruch 1, enthaltend als teilaromatisches Copolyamid B ein Copolyamid aus
B1: 20 bis 90 Gew.-% Einheiten, die sich von Terephthalsäure und Hexamethylendiamin ableiten und
B2: 10 bis 80 Gew.-% Einheiten mindestens eines der Bausteine B 21, B 22 und/oder B 23, nämlich
B21: bis zu 50 Gew.-% Einheiten B21, die sich von ε-Caprolactam ableiten
B22: bis zu 80 Gew.-% Einheiten B 22, die sich von Adipinsäure und Hexamethylendiamin ableiten und/oder
B23: bis zu 40 Gew.-% Einheiten B 23 aus weiteren polyamidbildenden Monomeren.

4. Formmasse nach Anspruch 1, enthaltend als Polyarylether ein Polysulfon mit überwiegenden Struktureinheiten der allgemeinen Formel

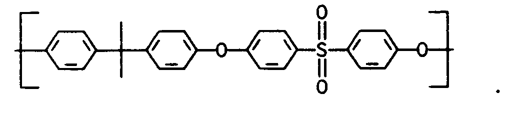

5. Formmasse nach Anspruch 1, enthaltend ein Polyethersulfon, mit Struktureinheiten der allgemeinen Formel

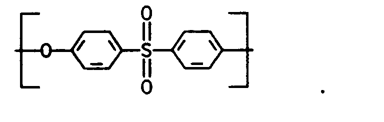

6. Formmasse nach Anspruch 5, enthaltend einen Polyarylether mit einer reduzierten Viskosität (gemessen in N-Methylpyrrolidon bei 25°C) von 0,3 bis 2,5.

7. Formmasse nach Anspruch 1, enthaltend ein teilaromatisches Copolyamid aus
50 bis 80 Gew.-% Einheiten, die sich von Terephthalsäure und Hexamethylendiamin, sowie
20 bis 50 Gew.-% Einheiten, die sich von ε-Caprolactam ableiten.

8. Formmasse nach Anspruch 1, enthaltend, bezogen auf den Anteil an Copolyamid,
0,1 bis 2 Gew.-% mindestens eines aromatischen, sekundären Amins und
100 bis 2000 ppm mindestens einer phosphorhaltigen anorganischen Säure oder eines ihrer Derivate.

9. Formmasse nach Anspruch 1, enthaltend einen Füllstoff, nämlich Glasfasern, Wollastonit, Kohlenstoff-Fasern oder eine Mischung dieser Stoffe.
